(19) Europäisches Patentamt
European Patent Office
Office européen des brevets

(11) EP 2 328 972 B1

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(21) Anmeldenummer: **09782996.4**

(22) Anmeldetag: **15.09.2009**

(51) Int Cl.:
***C08L 33/02*** *(2006.01)*

(86) Internationale Anmeldenummer:
**PCT/EP2009/061903**

(87) Internationale Veröffentlichungsnummer:
**WO 2010/034645 (01.04.2010 Gazette 2010/13)**

(54) **WÄSSRIGE BINDEMITTEL FÜR KÖRNIGE UND/ODER FASERFÖRMIGE SUBSTRATE**

AQUEOUS BINDING AGENTS FOR GRANULAR AND/OR FIBROUS SUBSTRATES

LIANTS AQUEUX POUR DES SUBSTRATS GRANULEUX ET/OU FIBREUX

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **29.09.2008 EP 08165335**

(43) Veröffentlichungstag der Anmeldung:
**08.06.2011 Patentblatt 2011/23**

(73) Patentinhaber: **BASF SE**
**67056 Ludwigshafen (DE)**

(72) Erfinder:
- **BRAUN, Markus**
  **69118 Heidelberg (DE)**
- **KRÜGER, Christian**
  **67346 Speyer (DE)**

(56) Entgegenhaltungen:
**WO-A-99/09100 DE-A1- 19 735 959**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung ist ein wässriges Bindemittel für körnige und/oder faserförmige Substrate, enthaltend als wirksame Bestandteile

a) mindestens ein durch radikalische Polymerisation erhältliches Polymerisat, welches ≥ 5,5 Gew.-% und ≤ 20 Gew.-% einer $\alpha,\beta$-ethylenisch ungesättigten Mono - oder Dicarbonsäure in einpolymerisierter Form enthält [Polymerisat A],

b) mindestens ein durch radikalische Polymerisation erhältliches Polymerisat, welches ≥ 40 Gew.-% einer $\alpha,\beta$-ethylenisch ungesättigten Mono- oder Dicarbonsäure in einpolymerisierter Form enthält [Polymerisat B], und

c) mindestens eine Polyolverbindung mit wenigstens zwei Hydroxylgruppen [Polyol C].

Gegenstand der vorliegenden Erfindung ist ebenfalls die Verwendung des wässrigen Bindemittels zur Herstellung von Formkörpern, ein Verfahren zur Herstellung von Formkörpern unter Verwendung von faserförmigen oder körnigen Substraten und wässrigem Bindemittel sowie die Formkörper selbst.

Die Verfestigung von faserförmigen oder körnigen Substraten, insbesondere in flächenförmigen Gebilden, wie beispielsweise Faservliesen, Faserplatten oder Spanplatten etc., erfolgt häufig auf chemischem Weg unter Verwendung eines polymeren Bindemittels. Zur Erhöhung der Festigkeit, insbesondere der Nass- und Wärmestandfestigkeit, werden vielfach Bindemittel eingesetzt, welche Formaldehyd abspaltende Vernetzer enthalten. Damit besteht aber die Gefahr der unerwünschten Formaldehydemission.

Zur Vermeidung von Formaldehydemissionen wurden bereits zahlreiche Alternativen zu den bisher bekannten Bindemitteln vorgeschlagen. So sind aus der US-A 4,076,917 Bindemittel bekannt, welche Carbonsäure- oder Carbonsäureanhydrid-haltige Polymerisate und β-Hydroxyalkylamide als Vernetzer enthalten. Nachteilig ist die relativ aufwendige Herstellung der β-Hydroxyalkylamide.

Aus der EP-A-445578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583086 sind formaldehydfreie, wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein reaktives Polyol eingesetzt wird. Als hochreaktive Polyole werden β-Hydroxyalkylamide genannt.

Die EP-A-651088 beschreibt entsprechende Bindemittel für Substrate aus Cellulosefaser. Diese Bindemittel enthalten zwingend einen phosphorhaltigen Reaktionsbeschleuniger.

Die EP-A-672920 beschreibt formaldehydfreie Binde-, Imprägnier- oder Beschichtungsmittel, die ein Polymerisat, welches zu 2 bis 100 Gew.-% aus einer ethylenisch ungesättigten Säure oder einem Säureanhydrid als Comonomer aufgebaut ist und mindestens ein Polyol enthalten. Bei den Polyolen handelt es sich um substituierte Triazin-, Triazintrion-, Benzol- oder Cyclohexylderivate, wobei die Polyolreste sich stets in 1,3,5-Position der erwähnten Ringe befinden. Trotz einer hohen Trocknungstemperatur werden mit diesen Bindemitteln auf Glasfaservliesen nur geringe Nassreißfestigkeiten erzielt.

Die DE-A-2214450 beschreibt ein Copolymerisat, das aus 80 bis 99 Gew.-% Ethylen und 1 bis 20 Gew.-% Maleinsäureanhydrid aufgebaut ist. Das Copolymerisat wird, zusammen mit einem Vernetzungsmittel, in Pulverform oder in Dispersion in einem wässrigen Medium, zur Oberflächenbeschichtung verwendet. Als Vernetzungsmittel wird ein aminogruppenhaltiger Polyalkohol verwendet. Um eine Vernetzung zu bewirken, muss jedoch auf bis zu 300 °C erhitzt werden.

Aus der US-A 5,143,582 ist die Herstellung hitzebeständiger Vliesmaterialien unter Verwendung eines thermisch aushärtenden, hitzebeständigen Bindemittels bekannt. Das Bindemittel ist frei von Formaldehyd und wird erhalten durch Mischen eines Carbonsäuregruppen, Carbonsäureanhydridgruppen oder Carbonsäuresalzgruppen aufweisenden Polymers und eines Vernetzers. Der Vernetzer ist ein β-Hydroxyalkylamid oder ein Polymer oder Copolymer davon. Das mit dem β-Hydroxyalkylamid vernetzbare Polymer ist beispielsweise aufgebaut aus ungesättigten Mono- oder Dicarbonsäuren, Salzen ungesättigter Mono- oder Dicarbonsäuren oder ungesättigten Anhydriden. Selbsthärtende Polymere werden erhalten durch Copolymerisation der β-Hydroxyalkylamide mit Carboxylgruppen enthaltenden Monomeren.

Gemäß der WO 99/09100 sind thermisch härtbare Zusammensetzungen und deren. Verwendung als formaldehydfreie Bindemittel zur Herstellung von Formkörpern offenbart, welche neben einem Alkanolamin mit wenigstens zwei OH-Gruppen, ein Polymerisat 1, welches ≤ 5 Gew.-% und ein weiteres Polymerisat 2, welches ≥ 15 Gew.-% einer

α,β-ethylenisch ungesättigten Mono- oder Dicarbonsäure in einpolymerisierter Form enthält. Allerdings vermögen die mit diesen Zusammensetzungen hergestellten Formkörper, insbesondere Faservliese, nicht in allen Eigenschaften, insbesondere der Reißkraft, voll zu befriedigen.

Aufgabe der vorliegenden Erfindung war es, ein alternatives formaldehydfreies Bindemittelsystem für körnige und/oder faserförmige Substrate zur Verfügung zu stellen, durch welches insbesondere in Faservliesen verbesserte mechanische Eigenschaften resultieren.

Demgemäß wurde das eingangs definierte wässrige Bindemittel gefunden.

Polymerisat A enthält ≥ 5,5 Gew.-% und ≤ 20 Gew.-%, bevorzugt ≥ 5,5 Gew.-% und ≤ 15 Gew.-% und insbesondere bevorzugt ≥ 5,5 Gew.-% und ≤ 10 Gew.-% wenigstens einer α,β-ethylenisch ungesättigten Mono- oder Dicarbonsäure [Monomere A] und dementsprechend ≥ 80 Gew.-% und ≤ 94,5 Gew.-%, bevorzugt ≥ 85 Gew.-% und ≤ 94,5 Gew.-% und insbesondere bevorzugt ≥ 90 Gew.-% und ≤ 94,5 Gew.-% wenigstens eines weiteren, sich von den α,β-ethylenisch ungesättigten Mono- oder Dicarbonsäuren unterscheidenden Monomers [Monomere B] in einpolymerisierter Form. Dabei addieren sich die Monomeren A und die Monomeren B zu 100 Gew.-%.

Bei den Monomeren A handelt es sich um α,β-monoethylenisch ungesättigte, insbesondere $C_3$- bis $C_6$-, bevorzugt $C_3$- oder $C_4$-Mono- oder Dicarbonsäuren sowie deren voll- oder teilneutralisierten wasserlöslichen Salze, insbesondere deren Alkalimetall - oder Ammoniumsalze, wie beispielsweise Acrylsäure, Methacrylsäure, Ethylacrylsäure, Itakonsäure, Allylessigsäure, Crotonsäure, Vinylessigsäure, Fumarsäure, Maleinsäure, 2-Methylmaleinsäure, aber auch um Halbester von ethylenisch ungesättigten Dicarbonsäuren, wie Maleinsäuremonoalkylester von $C_1$- bis $C_8$-Alkoholen sowie die Ammonium-, Natrium- oder Kaliumsalze der vorgenannten Säuren. Die Monomeren A umfassen aber auch die Anhydride entsprechender α,β-monoethylenisch ungesättigter Dicarbonsäuren, wie beispielsweise Maleinsäureanhydrid oder 2-Methylmaleinsäureanhydrid. Bevorzugt ist Monomer A ausgewählt aus der Gruppe umfassend Acrylsäure, Methacrylsäure, Crotonsäure, Fumarsäure, Maleinsäure, Maleinsäureanhydrid, 2-Methylmaleinsäure und Itakonsäure.

Als Monomere B kommen alle ethylenisch ungesättigten Monomere in Betracht, welche sich von den Monomeren A unterscheiden und mit diesen copolymerisierbar sind. Als Monomere B beispielhaft genannt seien vinylaromatische Verbindungen, wie Styrol, α-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome, bevorzugt 2 bis 12 C-Atome aufweisenden Monocarbonsäuren, wie Vinylacetat, Vinylpropionat, Vinyl-n-butyrat, Vinyllaurat und Vinylstearat, $C_1$- bis $C_{12}$-Alkylvinylether, wie Methylvinylether, Ethylvinylether, n-Propylvinylether, n-Butylvinylether, n-Pentylvinylether, n-Hexylvinylether, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar - und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren in Betracht. Die vorgenannten Monomere bilden in der Regel ≥ 50 Gew.-%, bevorzugt ≥ 80 Gew.-% und insbesondere bevorzugt ≥ 90 Gew.-% der Gesamtmenge aller Monomeren B und stellen somit die Hauptmonomeren B dar. Erfindungsgemäß bevorzugt enthält das Polymerisat A als Hauptmonomer einen Ester der Acrylsäure oder Methacrylsäure mit einem $C_1$- bis $C_{12}$-Alkohol, insbesondere n-Butylacrylat oder 2-Ethylhexylacrylat, eine vinylaromatische Verbindung, insbesondere Stylrol, ein Nitril einer α,β-monoethylenisch ungesättigten Carbonsäure, insbesondere Acrylnitril und/oder einen Vinylester einer $C_2$- bis $C_{12}$-Monocarbonsäure in einpolymerisierter Form.

Weiterhin kommen als Monomere B im untergeordnetem Maße solche ethylenisch ungesättigten Monomere in Betracht, die entweder wenigstens eine Sulfonsäuregruppe und/oder deren entsprechendes Anion bzw. wenigstens eine Amino-, Amido-, Ureido - oder N-heterocyclische Gruppe und/oder deren am Stickstoff protonierten oder alkylierten Ammoniumderivate enthalten. Beispielhaft genannt seien Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat. Die vorgenannten Monomere B werden in der Regel in Mengen ≤ 10 Gew.-%, bevorzugt ≤ 8 Gew.-% und insbesondere ≤ 5 Gew.-%, jeweils bezogen auf die Gesamtmenge an Monomeren B, eingesetzt. Als bevorzugtes Monomer wird Acrylamid und/oder Methacrylamid in einer Menge von ≥ 0,5 und ≤ 4 Gew.-%, bezogen auf die Gesamtmenge an Monomeren B eingesetzt.

Monomere, die üblicherweise die innere Festigkeit der Verfilmungen einer Polymermatrix erhöhen, weisen normalerweise wenigstens eine Epoxy-, wenigstens eine Carbonylgruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylat und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. Die vorgenannten Monomere B werden in der Regel in Mengen ≤ 10 Gew.-%, bevorzugt ≤ 5 Gew.-% und insbesondere ≤ 2 Gew.-%, jeweils bezogen auf die Gesamtmenge an Monomeren B, eingesetzt. Als bevorzugtes Monomer wird Allylmethacrylat, Methylenbisacrylamid, Divinylbenzol und/oder 1,4-Butylenglykoldiacrylat in einer Menge von ≥ 0,1 und ≤ 2 Gew.-%, bezogen auf die Gesamtmenge an Monomeren B eingesetzt.

Polymerisat B enthält ≥ 40 Gew.-%, bevorzugt ≥ 80 Gew.-% und insbesondere bevorzugt 100 Gew.-% wenigstens eines Monomere A und dementsprechend ≤ 60 Gew.-%, bevorzugt ≤ 20 Gew.-% und insbesondere bevorzugt keine Monomere B in einpolymerisierter Form. Dabei addieren sich die Monomeren A und die Monomeren B zu 100 Gew.-%.

Als bevorzugte Monomere A enthält das Polymerisat B mindestens eine Verbindung, die ausgewählt ist unter Acrylsäure, Methacrylsäure, Crotonsäure, Fumarsäure, Maleinsäure, Maleinsäureanhydrid, 2-Methylmaleinsäure und Itakonsäure.

Die Herstellung der Polymerisate A bzw. der Polymerisate B ist dem Fachmann geläufig und erfolgt beispielsweise durch radikalische Polymerisation der Monomere A und Monomere B nach der Methode der Substanz-, Emulsions-, Lösungs-, Fällungs- oder Suspensionspolymerisation (siehe hierzu auch die Herstellung der entsprechenden Polymerisate in der WO 99/09100, Seite 5, Zeile 12 bis Seite 13, Zeile 7). Bevorzugt werden die Polymerisate A durch radikalisch initiierte wässrige Emulsionspolymerisation und die Polymerisate B durch Lösungspolymerisation hergestellt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergierhilfsmitteln, im wässrigen Medium in Form von Monomerentröpfchen dispers verteilt und mittels eines radikalischen Polymerisationsinitiators polymerisiert.

Häufig weist das Polymerisat A eine Glasübergangstemperatur $T_g$ im Bereich ≥ 0 und ≤ 130 °C, vorteilhaft ≥ 20 und ≤ 100°C und insbesondere vorteilhaft ≥ 30 und ≤ 80 °C auf. Dabei ist mit der Glasübergangstemperatur $T_g$, der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Als Glasübergangstemperatur $T_g$ ist im Rahmen dieser Schrift diejenige Glasübergangstemperatur gemeint, welche nach dem DSC-Verfahren (Differential Scanning Calorimetry, 20 K/min, midpoint-Messung, DIN 53765) ermittelt wurde.

Durch die sogenannte Foxgleichung ist es dem Fachmann möglich, Polymerisate A im geeigneten $T_g$-Bereich zu identifizieren und diese durch geeignete Variation von Art und Menge der Monomeren A und B gezielt herzustellen.

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäß eingesetzten wässrigen Polymerisatdispersionen weisen üblicherweise Polymerfeststoffgehalte an Polymerisat A von ≥ 10 und ≤ 70 Gew.-%, häufig ≥ 20 und ≤ 65 Gew.-% und oft ≥ 40 und ≤ 60 Gew.-%, jeweils bezogen auf die wässrige Polymerisatdispersion, auf. Der über quasielastische Lichtstreuung (ISO-Norm 13321) ermittelte zahlenmittlere Teilchendurchmesser der Emulsionspolymerisate A (cumulant z-average) liegt in der Regel zwischen 10 und 2000 nm, vorteilhaft zwischen 20 und 1000 nm und insbesondere vorteilhaft zwischen 50 und 700 nm bzw. 80 bis 400 nm.

Auch die radikalisch initiierte Lösungspolymerisation ist dem Fachmann geläufig und erfolgt insbesondere in Wasser oder einem organischen Lösungsmittel (siehe beispielsweise A. Echte, Handbuch der Technischen Polymerchemie, Kapitel 6, VCH, Weinheim, 1993 oder B. Vollmert, Grundriss der Makromolekularen Chemie, Band 1, E. Vollmert Verlag, Karlsruhe, 1988; L. Kotzeva, J. Polym. Sci. A-27, 1989 (4), Seiten 1325ff; C. Erbil et al., Polymer 41, 2000, Seiten 1391ff; C. Yang, X. Lu Yun, J. Polym. Sci. 75(2), 2000, Seiten 327ff; M. Sen et al., Polymer 40(9), 1999, Seiten 913ff; F. Wang et al., Anal. Chem. 68, 1996, Seiten 2477ff; J. Velada et al., Macromol. Chem. and Phys. 196, 1995, Seiten 3171ff; J.M. Cowie, C. Haq, Br. Polym. J. 9, 1977, Seiten 241ff; J. Velada et al., Polymer Degradation and Stability 52, 1996, Seiten 273ff; A. Horta et al., Makromol. Chem., Rapid Commun. 8, 1987, Seiten 523ff; T. Hirano et al., J. Polym. Sci. A-38, 2000, Seiten 2487ff; B.E. Tate, Adv. Polymer Sci. 5, 1967, Seiten 214ff). Erfolgt dabei die Herstellung von Polymerisat B in einem organischen Lösungsmittel, so wird in der Regel das organische Lösungsmittel nach Abschluss der Polymerisation zumindest teilweise, vorteilhaft zu ≥ 50 Gew.-% oder ≥ 90 Gew.-% und insbesondere vorteilhaft vollständig entfernt und das Polymerisat B in Wasser, vorteilhaft in entionisiertem Wasser aufgenommen. Die entsprechenden Verfahren sind dem Fachmann geläufig. So kann beispielsweise der Austausch des Lösungsmittels gegen Wasser derart erfolgen, dass das Lösungsmittel, beispielsweise bei Normaldruck (1 atm absolut) oder im Unterdruck (< 1 atm absolut) zumindest teilweise, vorteilhaft vollständig in einer oder mehreren Stufen abdestilliert und durch Wasser ersetzt wird. Häufig kann es günstig sein, das Lösungsmittel durch Einleiten von Wasserdampf aus der Lösung zu entfernen und dabei gleichzeitig durch Wasser zu ersetzen. Dies ist insbesondere dann der Fall, wenn das organische Lösungsmittel eine gewisse Wasserdampfflüchtigkeit aufweist.

Vorteilhaft weist Polymerisat B ein gewichtsmittleres Molekulargewicht ≥ 1000 g/mol und ≤ 1000000 g/mol auf. Günstig ist es, wenn das gewichtsmittlere Molekulargewicht von Polymerisat B ≤ 500000 g/mol und besonders vorteilhaft ≤ 200000 g/mol ist. Insbesondere vorteilhaft weist Polymererisat B ein gewichtsmittleres Molekulargewicht ≥ 3000 g/mol, bevorzugt ≥ 5000 g/mol und insbesondere ≥ 10000 g/mol auf. Die Einstellung des gewichtsmittleren Molekulargewichts bei der Herstellung von Polymerisat B ist dem Fachmann geläufig und erfolgt vorteilhaft durch radikalisch initiierte wässrige Lösungspolymerisation in Anwesenheit von radikalkettenübertragenden Verbindungen, den sogenannten Radikalkettenreglern. Auch die Bestimmung des gewichtsmittleren Molekulargewichts ist dem Fachmann geläufig und erfolgt beispielsweise mittels Gelpermeationschromatographie.

Erfindungsgemäß enthält das wässrige Bindemittel neben dem Polymerisat A und dem Polymerisat B als wirksamen Bestandteil noch eine Polyolverbindung C mit wenigstens 2 Hydroxylgruppen (Polyol C). Dabei werden vorteilhaft solche Polyole C eingesetzt, die bei den Temperaturen der Trocknung bzw. Aushärtung nicht oder lediglich gering flüchtig sind und daher einen entsprechend niedrigen Dampfdruck aufweisen.

Dabei kann das Polyol C prinzipiell eine Verbindung mit einem Molekulargewicht ≤ 1000 g/mol oder eine polymere Verbindung mit einem Molekulargewicht > 1000 g/mol sein. Als polymere Verbindungen mit wenigstens 2 Hydroxylgruppen seien beispielhaft Polyvinylalkohol, teilhydrolysiertes Polyvinylacetat, Homo- oder Copolymerisate von Hydroxyalkylacrylaten oder Hydroxyalkylmethacrylaten, wie beispielsweise Hydroxyethylacrylat bzw. -methacrylat oder Hydroxypropylacrylat bzw. -methacrylat genannt. Beispiele weiterer erfindungsgemäß einsetzbarer polymerer Polyole C finden sich u.a. in WO 97/45461, Seite 3, Zeile 3 bis Seite 14, Zeile 33.

Als Polyol C mit einem Molekulargewicht ≤ 1000 g/mol kommen alle die organischen Verbindung in Betracht, die wenigstens 2 Hydroxylgruppen und ein Molekulargewicht ≤ 1000 g/mol aufweisen. Beispielhaft genannt seien Ethylenglykol, 1,2-Propylenglykol, Glyzerin, 1,2- bzw. 1,4-Butandiol, Pentaerythrit, Trimethylolpropan, Sorbit, Saccharose, Glucose, 1,2-, 1,3- bzw. 1,4-Dihydroxybenzol, 1,2,3-Trihydroxybenzol, 1,2-, 1,3- bzw. 1,4-Dihydroxycyclohexan sowie bevorzugt Alkanolamine, wie beispielsweise Verbindungen der allgemeinen Formel (I)

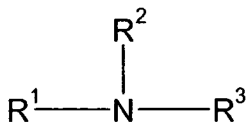 Formel (I),

in der $R^1$ für ein H-Atom, eine $C_1$- bis $C_{10}$-Alkylgruppe oder eine $C_2$- bis $C_{10}$-Hydroxyalkylgruppe steht und $R^2$ und $R^3$ für eine $C_2$- bis $C_{10}$-Hydroxyalkylgruppe stehen.

Besonders bevorzugt stehen $R^2$ und $R^3$ unabhängig voneinander für eine $C_2$- bis $C_5$-Hydroxyalkylgruppe und $R^1$ für ein H-Atom, eine $C_1$- bis $C_5$-Alkylgruppe oder eine $C_2$-bis $C_5$-Hydroxyalkylgruppe.

Als Verbindungen der Formel (I) seien insbesondere Diethanolamin, Triethanolamin, Diisopropanolamin, Triisopropanolamin, Methyldiethanolamin, Butyldiethanolamin und/oder Methyldiisopropanolamin genannt.

Beispiele weiterer erfindungsgemäß einsetzbarer Polyole C mit einem Molekulargewicht ≤ 1000 g/mol finden sich ebenfalls in WO 97/45461, Seite 3, Zeile 3 bis Seite 14, Zeile 33. Beispiele weiterer Polyole C mit einem Molekulargewicht ≤ 1000 g/mol sowie > 1000 g/mol finden sich auch in der WO 99/09100, Seite 13, Zeile 29 bis Seite 24, Zeile 32. Durch ihre ausdrückliche Bezugnahme sollen die genannten Polyole C als integraler Bestandteil dieser Schrift

angesehen werden.

Bevorzugt wird das Polyol C ausgewählt aus der Gruppe umfassend Diethanolamin, Triethanolamin, Diisopropanolamin, Triisopropanolamin, Methyldiethanolamin, Butyldiethanolamin und/oder Methyldiisopropanolamin, wobei Triethanolamin insbesondere bevorzugt ist.

Bei den erfindungsgemäß einsetzbaren wässrigen Bindemitteln werden das Polymerisat A, das Polymerisat B und das Polyol C bevorzugt in einem solchen Mengenverhältnis zueinander eingesetzt, dass das Gewichtsverhältnis von Polymerisat A zu Polymerisat B (auf Feststoffbasis) 100:1 bis 1:100, vorteilhaft 10:1 bis 1:10 und insbesondere vorteilhaft 7:3 bis 3:7 und das Gewichtsverhältnis von Polymerisat B zu Polyol C (auf Feststoffbasis) 100:1 bis 1:1, vorteilhaft 50:1 bis 1,5:1 und insbesondere vorteilhaft 10:1 bis 2:1 beträgt.

Insbesondere vorteilhaft werden die Mengen an Polymerisat A, Polymerisat B und Polyol C so gewählt, dass das Verhältnis der Anzahl von Äquivalenten Carboxylgruppen der Polymerisate A und B (in Summe) zu der Anzahl von Äquivalenten Hydroxylgruppen des Polyols C im Bereich 20:1 bis 1:1, bevorzugt 15:1 bis 1,5:1 und besonders bevorzugt 12:1 bis 2:1 beträgt (wobei die Anhydridgruppen hierbei als 2 Carboxylgruppen berechnet werden).

Die Herstellung der erfindungsgemäß einsetzbaren wässrigen Bindemittel ist dem Fachmann geläufig und erfolgt beispielsweise durch beliebiges Mischen der Einzelkomponenten in einem wässrigen Medium. In einer weiteren Ausführungsform kann die Herstellung des wässrigen Bindemittels auch dergestalt erfolgen, dass die Herstellung des Polymerisats A in einem wässrigen Medium in Anwesenheit von Polymerisat B durchgeführt wird und das Polyol C dem wässrigen Medium dieser Polymerisatmischung zugemischt wird.

Die vorgenannten wässrigen Bindemittel enthalten vorzugsweise ≤ 5 Gew.-%, häufig ≤ 1,0 Gew.-%, oft ≤ 0,5 Gew.-% sowie häufig ≥ 0,1 Gew.-% und oft ≥ 0,3 Gew.-%, bezogen auf die Summe der Gesamtmengen an Polymerisat A, Polymerisat B und Polyol C (fest/fest) eines Phosphor enthaltenden Reaktionsbeschleunigers. Phosphor enthaltende Reaktionsbeschleuniger sind beispielsweise in EP-A 583086 und EP-A 651088 offenbart. Es handelt sich dabei insbesondere um Alkalimetallhypophoshpite, - phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die erfindungsgemäßen wässrigen Bindemittel enthalten jedoch vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können jedoch dem Fachmann geläufige Veresterungskatalysatoren enthalten, wie beispielsweise Schwefelsäure oder p-Toluolsulfonsäure bzw. Titanate oder Zirkonate.

Desweiteren können die erfindungsgemäßen wässrigen Bindemittel auch weitere, dem Fachmann geläufige optionale Hilfsstoffe, wie beispielsweise so genannte Verdicker, Entschäumer, Neutralisationsmittel, Puffersubstanzen, Konservierungsmittel, feinteilige inerte Füllstoffe, wie Aluminiumsilikate, Quarz, gefällte oder pyrogene Kieselsäure, Leicht- oder Schwerspat, Talkum oder Dolomit, farbgebende Pigmente, wie Titanweiß, Zinkweiß oder Eisenoxidschwarz, Haftvermittler und/oder Flammschutzmittel enthalten.

Sollen die erfindungsgemäßen wässrigen Bindemittel als Bindemittel für Mineralfasern und/oder Glasfasern bzw. daraus hergestellte Vliese eingesetzt werden, so wird den wässrigen Bindemitteln vorteilhaft ≥ 0,001 und ≤ 5 Gew.-% und insbesondere vorteilhaft ≥ 0,05 und ≤ 2 Gew.-%, bezogen auf die Summe der Gesamtmengen an Polymerisat A, Polymerisat B und Polyol C, wenigstens einer siliziumhaltigen organischen Verbindung (Haftvernetzer), beispielsweise eines Alkoxysilans, wie Methyltrimethoxysilan, n-Propyltrimethoxysilan, n-Octyltrimethoxysilan, n-Decyltriethoxysilan, n-Hexadecyltrimethoxysilan, Dimethyldimethoxysilan, Trimethylmethoxysilan, 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan, 3-Mercaptopropyltrimethoxysilan und/oder Phenyltrimethoxysilan zugesetzt, wobei funktionalisierte Alkoxysilane, wie 3-Acetoxypropyltrimethoxysilan, 3-Aminopropyltrimethoxysilan, 3-Aminopropyltriethoxysilan, 3-Chloropropyltrimethoxysilan, (3-Glycidyloxypropyl)trimethoxysilan und/oder 3-Mercaptopropyltrimethoxysilan besonders bevorzugt sind, zugesetzt.

Die erfindungsgemäßen wässrigen Bindemittel weisen üblicherweise Feststoffgehalte (gebildet aus der Summe der Gesamtmenge an Polymerisat A, Polymerisat B und Polyol C als Feststoff gerechnet) von ≥ 1 und ≤ 70 Gew.-%, häufig ≥ 5 und ≤ 65 Gew.-% und oft ≥ 10 und ≤ 55 Gew.-%, jeweils bezogen auf das wässrige Bindemittel auf.

Die erfindungsgemäßen wässrigen Bindemittel weisen üblicherweise pH-Werte (gemessen bei 23 °C; mit entionisiertem Wasser auf einen Feststoffgehalt von 10 Gew.-% verdünnt) im Bereich von ≥ 1 und ≤ 10, vorteilhaft ≥ 2 und ≤ 6 und insbesondere vorteilhaft ≥ 3 und ≤ 5 auf. Dabei können zur Einstellung des pH-Wertes alle dem Fachmann geläufige basische Verbindungen eingesetzt werden. Häufig werden jedoch solche basischen Verbindungen verwendet, die bei den Temperaturen während der Trocknung bzw. Aushärtung nicht flüchtig sind, wie beispielsweise Natriumhydroxid, Kaliumhydroxid oder Natriumcarbonat.

Die vorgenannten wässrigen Bindemittel eignen sich vorteilhaft zur Verwendung als Bindemittel für körnige und/oder faserförmige Substrate. Mit Vorteil lassen sich die genannten wässrigen Bindemittel daher zur Herstellung von Formkörpern aus körnigen und/oder faserförmigen Substraten einsetzen.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern wie Jute, Flachs, Hanf oder Sisal, aber auch Korkschnitzel, Sand sowie andere organische oder anorganische natürliche und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise so genannte mechanisch verfestigte (beispielsweise genadelte) oder chemisch, beispielsweise mit Melamin/Formaldehyd-Harzen oder Polyvinylalkohol vorgebundene Faservliese mit umfassen. Insbesondere vorteilhaft ist das erfindungsgemäße wässrige Bindemittel als formaldehydfreies Bindemittelsystem für die vorgenannten Fasern bzw. daraus gebildete Faservliese geeignet.

Das Verfahren zur Herstellung eines Formkörpers aus einem körnigen und/oder faserförmigen Substrat und dem vorgenannten wässrigen Bindemittel erfolgt vorteilhaft dergestalt, dass das erfindungsgemäße wässrige Bindemittel auf die körnigen und/oder faserförmigen Substrate aufgebracht wird bzw. die körnigen und/oder faserförmigen Substrate mit dem erfindungsgemäßen wässrigen Bindemittel getränkt werden, gegebenenfalls die mit dem wässrigen Bindemittel behandelten körnigen und/oder faserförmigen Substrate in Form gebracht werden und die behandelten körnigen und/oder faserförmigen Substrate anschließend einem thermischen Behandlungsschritt bei einer Temperatur ≥ 110 °C unterzogen werden.

Die Behandlung (Imprägnierung) der körnigen und/oder faserförmigen Substrate mit dem erfindungsgemäßen wässrigen Bindemittel erfolgt in der Regel dergestalt, dass das vorgenannte wässrige Bindemittel gleichmäßig auf die Oberfläche der körnigen und/oder faserförmigen Substrate aufgebracht wird. Dabei wird die Menge an wässrigem Bindemittel so gewählt, dass pro 100 g körnigem und/oder faserförmigem Substrat ≥ 0,1 g und ≤ 100 g, bevorzugt ≥ 1 g und ≤ 50 g und insbesondere bevorzugt ≥ 5 g und ≤ 30 g Bindemittel, gebildet aus der Summe der Gesamtmengen an Polymerisat A, Polymerisat B und Polyol C (als Feststoff gerechnet) eingesetzt werden. Die Imprägnierung der körnigen und/oder faserförmigen Substrate ist dem Fachmann geläufig und erfolgt beispielsweise durch Tränkung oder durch Besprühen der körnigen und/oder faserförmigen Substrate.

Nach der Imprägnierung wird das körnige und/oder faserförmige Substrat gegebenenfalls in die gewünschte Form gebracht, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 110 °C, bevorzugt ≥ 20 °C und ≤ 100 °C und insbesondere bevorzugt ≥ 40 und ≤ 100 °C und die Aushärtungsstufe bei einer Temperatur ≥ 110 °C, bevorzugt ≥ 130 und ≤ 250 °C oder ≥ 160 und ≤ 220 °C und insbesondere bevorzugt ≥ 170 °C und ≤ 210 °C erfolgt.

Die Trocknungsstufe erfolgt dabei vorteilhaft dergestalt, dass bei einer Temperatur < 110 °C so lange getrocknet wird, bis das in Form gebrachte imprägnierte körnige und/oder faserförmige Substrat, welches häufig noch nicht seine endgültige Form aufweist (sogenanntes Halbzeug) eine Restfeuchte ≤ 30 Gew.-%, bevorzugt ≤ 15 Gew.-% und insbesondere bevorzugt ≤ 10 Gew.-% aufweist. Dabei wird die Restfeuchte generell bestimmt, indem ca. 1 g des erhaltenen Halbzeugs bei Raumtemperatur gewogen, dieses daran anschließend für 2 Minuten bei 110 °C getrocknet und daran anschließend abgekühlt und wieder bei Raumtemperatur gewogen wird. Dabei entspricht die Restfeuchte der Gewichtsdifferenz des Halbzeugs vor und nach dem Trocknungsvorgang bei 110 °C, bezogen auf das Gewicht des Halbzeugs vor dem Trocknungsvorgang multipliziert mit dem Faktor 100.

Das so erhaltene Halbzeug ist nach Erwärmen auf eine Temperatur von ca. 100 °C noch verformbar und kann bei dieser Temperatur in die endgültige Form des gewünschten Formkörpers gebracht werden.

Die nachfolgende Aushärtungsstufe erfolgt vorteilhaft dergestalt, dass das Halbzeug bei einer Temperatur ≥ 110 °C solange erhitzt wird, bis dieses eine Restfeuchte ≤ 2 Gew.-%, bevorzugt ≤ 1 Gew.-% oder ≤ 0,5 Gew.-% und insbesondere bevorzugt ≤ 0,1 Gew.-% aufweist, wobei das Bindemittel in Folge einer chemischen Veresterungsreaktion aushärtet.

Häufig erfolgt die Herstellung der Formkörper dadurch, dass das Halbzeug in einer Formpresse in den vorgenannten Temperaturbereichen in die endgültige Form gebracht und daran anschließend ausgehärtet wird.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper, insbesondere Faservliese weisen vorteilhafte Eigenschaften, insbesondere eine verbesserte Reißfestigkeit im Vergleich zu den Formkörpern des Standes der Technik auf.

Die Erfindung soll anhand nachfolgender nicht einschränkender Beispiele erläutert werden.

Beispiele

A. Herstellung der Polymerisate A

Polymerisat A1 (PA1)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 200,0 g | entionisiertes Wasser und |
| 10,9 g | einer wässrigen Polystyrolsaat (Feststoffgehalt 33 Gew.-%, zahlenmittlerer Teilchendurchmesser 32 nm) |

vorgelegt und unter Rühren auf 90 °C aufgeheizt. Bei Erreichung dieser Temperatur wurden 11,1 g einer 7 gew.-%igen wässrigen Lösung von Natriumperoxodisulfat in entionisiertem Wasser zugegeben. Danach wurden bei 90 °C zeitgleich beginnend Zuläufe 1 und 2 innerhalb von 3 Stunden mit gleich bleibenden Mengenströmen kontinuierlich zudosiert.

Zulauf 1 (homogene Mischung aus):

| | |
|---|---|
| 528,4 g | entionisiertes Wasser |
| 80,0 g | einer 15 gew.-%igen wässrigen Lösung von Natriumlaurylsulfat |
| 263,4 g | n-Butylacrylat (nBA) |
| 213,0 g | Styrol (ST) |
| 62,7 g | Acrylnitril (AN) |
| 37,2 g | einer 50 gew.-%igen wässrigen Lösung von Acrylamid (AA) |
| 6,3 g | Allylmethacrylat (AMA) und |
| 36,0 g | Methacrylsäure (MS) |

Zulauf 2 (homogene Lösung aus):

| | |
|---|---|
| 35,1 g | entionisiertem Wasser und |
| 2,6 g | Natriumperoxodisulfat |

Nach Beendigung der Zuläufe 2 und 3 ließ man das Polymerisationsgemisch noch 1 Stunde bei 90 °C nachreagieren. Daran anschließend wurden dem Polymerisationsgemisch zeitgleich beginnend über separate Zulaufleitungen 12 g einer 10 gew.-%igen wässrigen Lösung von tert.-Butylhydroperoxid und eine Lösung aus 1,3 g Natriumdisulfit, 0,7 g Aceton und 14,3 g entionisiertem Wasser innerhalb von zwei Stunden mit gleich bleibenden Mengenströmen kontinuierlich zudosiert. Abschließend wurde dem Polymerisationsgemisch eine Lösung, bestehend aus 28,1 g einer 32 gew.-%igen wässrigen Lösung eines $C_{12}/C_{14}$-Alkylpolyglykolethersulfat-Natriumsalzes (Emulphor® FAS 30; Verkaufsprodukt der BASF SE) verdünnt mit 15 g entionisiertem Wasser, innerhalb von 10 Minuten zudosiert und dann das Polymerisationsgemisch auf Raumtemperatur abgekühlt.

Die erhaltene wässrige Polymerisatdispersion wies einen Feststoffgehalt von 39,7 Gew.-% und eine Glasübergangstemperatur von 48 °C auf. Der mittlere Teilchendurchmesser betrug 142 nm.

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 120 °C in einem Trockenschrank bis zur Gewichtskonstanz getrocknet wurde (ca. 2 Stunden). Es wurden jeweils zwei separate Messungen durchgeführt. Die in den Beispielen angegebenen Werte stellen den Mittelwert der jeweiligen beiden Messergebnisse dar.

Der mittlere Teilchendurchmesser der Polymerteilchen wurde generell durch dynamische Lichtstreuung, einer mit entionisiertem Wasser auf 0,005 bis 0,01 Gew.-% verdünnten wässrigen Polymerisatdispersion bei 23 °C mittels eines Autosizer IIC der Fa. Malvern Instruments, England, ermittelt. Angegeben wird der mittlere Durchmesser der Kumulantenauswertung (cumulant $Z_{average}$) der gemessenen Autokorrelationsfunktion (ISO-Norm 13321).

Die Glasübergangstemperatur wurde generell nach dem DSC-Verfahren (Differential Scanning Calorimetry, 20 K/min, midpoint-Messung, DIN 53765) ermittelt.

Polymerisat A2 (PA2)

Die Herstellung von PA2 erfolgte analog der Herstellung von PA1 mit dem Unterschied, dass in Zulauf 1 18,0

g MS und 18,0 g Acrylsäure (AS) anstelle von 36,0 g MS eingesetzt wurden.

Die erhaltene wässrige Polymerisatdispersion wies einen Feststoffgehalt von 39,0 Gew.-% und eine Glasübergangstemperatur von 48 °C auf. Der mittlere Teilchendurchmesser betrug 163 nm.

Polymerisat A3 (PA3)

Die Herstellung von PA3 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 528,4 g entionisiertem Wasser 257,4 g nBA, 208,8 g ST, 61,2 g AN, 37,2 g AA, 6,0 g AMA und 48,0 g MS bestand.

Die erhaltene wässrige Polymerisatdispersion wies einen Feststoffgehalt von 39,1 Gew.-% und eine Glasübergangstemperatur von 46 °C auf. Der mittlere Teilchendurchmesser betrug 123 nm.

Polymerisat A4 (PA4)

Die Herstellung von PA4 erfolgte analog der Herstellung von PA3 mit dem Unterschied, dass in Zulauf 1 24,0 g MS und 24,0 g AS anstelle von 48,0 g MS eingesetzt wurden.

Die erhaltene wässrige Polymerisatdispersion wies einen Feststoffgehalt von 39,7 Gew.-% und eine Glasübergangstemperatur von 46 °C auf. Der mittlere Teilchendurchmesser betrug 157 nm.

Polymerisat A5 (PA5)

Die Herstellung von PA5 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 529,0 g entionisiertem Wasser 252,0 g nBA, 204,0 g ST, 60,0 g AN, 36,0 g AA, 6,0 g AMA und 60,0 g MS bestand.

Die erhaltene wässrige Polymerisatdispersion wies einen Feststoffgehalt von 39,8 Gew.-% und eine Glasübergangstemperatur von 57 °C auf. Der mittlere Teilchendurchmesser betrug 100 nm.

Polymerisat A6 (PA6)

Die Herstellung von PA6 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 530,2 g entionisiertem Wasser 238,2 g nBA, 192,6 g ST, 56,7 g AN, 33,6 g AA, 5,7 g AMA und 90,0 g MS bestand.

Die erhaltene wässrige Polymerisatdispersion wies einen Feststoffgehalt von 39,8 Gew.-% und eine Glasübergangstemperatur von 70 °C auf. Der mittlere Teilchendurchmesser betrug 142 nm.

Polymerisat A7 (PA7)

Die Herstellung von PA7 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 530,8 g entionisiertem Wasser 229,8 g nBA, 186,0 g ST, 54,6 g AN, 32,4 g AA, 5,4 g AMA und 108,0 g MS bestand.

Die erhaltene wässrige Polymerisatdispersion wies einen Feststoffgehalt von 39,9 Gew.-% und eine Glasübergangstemperatur von 77 °C auf. Der mittlere Teilchendurchmesser betrug 135 nm.

Vergleichspolymerisat 1 (VA1)

Die Herstellung von VA1 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 527,8 g entionisiertem Wasser 268,8 g nBA, 217,8 g ST, 63,9 g AN, 38,4 g AA, 6,3 g AMA und 24,0 g MS bestand.

Die erhaltene wässrige Polymerisatdispersion wies einen Feststoffgehalt von 38,9 Gew.-% und eine Glasübergangstemperatur von 44 °C auf. Der mittlere Teilchendurchmesser betrug 156 nm.

Vergleichspolymerisat 2 (VA2)

Die Herstellung von VA2 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 527,5 g entionisiertem Wasser 274,5 g nBA, 222,0 g ST, 65,4 g AN, 39,0 g AA, 6,6 g AMA und 12,0 g MS bestand.

Die erhaltene wässrige Polymerisatdispersion wies einen Feststoffgehalt von 39,2 Gew.-% und eine Glasübergangstemperatur von 40 °C auf. Der mittlere Teilchendurchmesser betrug 117 nm.

Vergleichspolymerisat 3 (VA3)

Die Herstellung von VA3 erfolgte analog der Herstellung von PA1 mit dem Unterschied, dass Zulauf 1, unter Konstanthaltung der Emulgatormenge sowie der Mengenverhältnisse der Monomeren nBA, ST, AN, AA und AMA untereinander, aus 527,2 g entionisiertem Wasser 280,2 g nBA, 226,8 g ST, 66,6 g AN, 39,6 g AA und 6,6 g AMA bestand.

Die erhaltene wässrige Polymerisatdispersion wies einen Feststoffgehalt von 39,9 Gew.-% und eine Glasübergangstemperatur von 34 °C auf. Der mittlere Teilchendurchmesser betrug 123 nm.

Die erhaltenen Polymerisatdispersionen PA1 bis PA7 und VA1 bis VA3 wurden mit entionisiertem Wasser auf einen Feststoffgehalt von 38,5 Gew.-% verdünnt.

B. Herstellung von Polymerisat B

In einen 2 l-Vierhalskolben, ausgerüstet mit einem Anker-Rührer, Rückflusskühler und Dosiereinrichtungen, wurden bei Raumtemperatur 212 g entionisiertes Wasser, 10 mg Eisen-II-sulfat-Heptahydrat und 201 g Maleinsäureanhydrid unter Stickstoffatmosphäre vorgelegt. Daran anschließend wurde die Vorlagenlösung unter Rühren auf 100 °C aufgeheizt. Nach Erreichen dieser Temperatur wurde der Initiatorzulauf, bestehend aus einer homogenen Lösung von 2,0 g Natriumpersulfat und 256 g entionisiertem Wasser, gestartet und mit konstantem Mengenstrom innerhalb von 5 Stunden in die Vorlage dosiert. 5 Minuten nach dem Start des Initiatorzulaufs wurde der Monomerenzulauf, bestehend aus einer homogenen Lösung von 215 g entionisiertem Wasser und 734 g AS, gestartet und mit konstantem Mengenstrom innerhalb von 4 Stunden in die wässrige Polymerisationsmischung dosiert. Nach dem Ende des Initiatorzulaufs ließ man das Polymerisationsgemisch noch 1 Stunde bei Polymerisationstemperatur nachregagieren und kühlte dann die erhaltene klare Polymerlösung auf Raumtemperatur ab.

Die erhaltene Polymerisat B-Lösung wies einen Feststoffgehalt von 46,3 Gew.-% auf. Der K-Wert des Polymerisats B wurde nach Fikentscher (ISO 1628-1) zu bestimmt und betrug 23

Mit entionisiertem Wasser wurde die erhaltene Polymerlösung auf einen Feststoffgehalt von 45 Gew.-% verdünnt.

C. Herstellung der wässrigen Bindemittel

Zu jeweils 77,9 Gew.-Teilen der auf 38,5 Gew.-% verdünnten Polymerisatdispersionen PA1 bis PA7 und VA1 bis VA3 wurden bei Raumtemperatur unter Rühren zuerst 34,5 Gew.-Teile der auf 45 Gew.-% verdünnten Polymerisat B-Lösung und daran anschließend 4,6 Gew.-Teile Triethanolamin sowie 216,6 Gew.-Teile entionisiertes Wasser gegeben und danach die erhaltenen wässrigen Bindemittel für jeweils 15 Minuten gerührt.

D. Anwendungstechnische Untersuchungen

Es wurden genadelte Polyethylenterephtalat (PET)-Spinnvliese der Firma Freudenberg-Politex mit einem Flächengewicht von 150 g/$m^2$ eingesetzt.

Zur Imprägnierung wurden die PET-Spinnvliese in Längsrichtung über ein Endlos-PES-Siebband mit einer Bandlaufgeschwindigkeit von 60 cm pro Minute jeweils durch die vorgenannten 15 gew.-%igen wässrigen Bindemittelflotten geleitet. Durch anschließende Absaugung des wässrigen Bindemittels wurde der Nassauftrag auf 195 g/$m^2$ (entsprechend 29,3 g/$m^2$ Bindemittel als Feststoff gerechnet) eingestellt. Die so erhaltenen imprägnierten PET-Spinnvliese wurden auf einen Kunststoffnetz als Träger für 3 Minuten bei 200 °C in einem Mathis-Ofen bei maximalen Heißluftstrom getrocknet/ausgehärtet. Nach dem Abkühlen auf Raumtemperatur wurden Prüfstreifen mit einer Größe von 240 x 50 mm in Faserlängsrichtung geschnitten. Die erhaltenen Prüfstreifen wurden anschließend für 24 Stunden bei 23 °C und 50 % relativer Luftfeuchtigkeit im Klimaraum gelagert. Die in Abhängigkeit von dem für das entsprechende wässrige Bindemittel eingesetzten Polymerisat A erhaltenen PET-Spinnvliesprüfstreifen werden im folgenden Prüfstreifen PA1 bis PA7 und VA1 bis VA3 bezeichnet.

Bestimmung der Reißkraft bei 23 °C

Die Bestimmung der Reißkraft erfolgte nach DIN 52123 mit einer Zugprüfmaschine der Firma Zwick-Roell. Die Prüfstreifen PA1 bis PA6 und VA1 bis VA3 wurden dabei so senkrecht eine Spannvorrichtung eingebracht, dass die freie Einspannlänge 200 mm betrug. Daran anschließend wurden die eingespannten Prüfstreifen bei 23 °C mit einer Geschwindigkeit von 25 mm pro Minute in entgegen gesetzter Richtung bis zum Riss der Prüfstreifen auseinander gezogen. Je höher die zum Riss der Prüfstreifen erforderliche Kraft ist, desto besser ist die entsprechende Reißkraft zu bewerten. Es erfolgten jeweils 5 Messungen. Die in Tabelle 1 angegebenen Werte stellen jeweils den Mittelwert dieser Messungen dar.

Tabelle 1: Zusammenfassung der Reißkraftergebnisse

| Prüfstreifen | Reißkraft [in N/50 mm] |
|---|---|
| PA1 | 384 |
| PA2 | 399 |
| PA3 | 411 |
| PA4 | 389 |
| PA5 | 386 |
| PA6 | 394 |
| PA7 | 376 |
| VA1 | 358 |
| VA2 | 360 |
| VA3 | 367 |

Aus den Ergebnissen ist klar ersichtlich, dass die unter Verwendung der erfindungsgemäßen wässrigen Bindemittel erhaltenen Prüfstreifen ein verbessertes Reißkraftverhalten aufweisen wie die gemäß des Standes der Technik verwendeten wässrigen Bindemittel.

## Patentansprüche

1. Wässriges Bindemittel für körnige und/oder faserförmige Substrate, enthaltend als wirksame Bestandteile

   a) mindestens ein durch radikalische Polymerisation erhältliches Polymerisat, welches ≥ 5,5 Gew.-% und ≤ 20 Gew.-% einer α,β-ethylenisch ungesättigten Mono- oder Dicarbonsäure in einpolymerisierter Form enthält [Polymerisat A],
   b) mindestens ein durch radikalische Polymerisation erhältliches Polymerisat, welches ≥ 40 Gew.-% einer α,β-ethylenisch ungesättigten Mono- oder Dicarbonsäure in einpolymerisierter Form enthält [Polymerisat B], und
   c) mindestens eine Polyolverbindung mit wenigstens zwei Hydroxylgruppen [Polyol C].

2. Wässriges Bindemittel nach Anspruch 1, wobei das Polymerisat A als Mono - oder Dicarbonsäure mindestens eine Verbindung in einpolymerisierter Form enthält, die ausgewählt ist aus der Gruppe umfassend Acrylsäure, Methacrylsäure, Crotonsäure, Fumarsäure, Maleinsäure, Maleinsäureanhydrid, 2-Methylmaleinsäure und Itakonsäure.

3. Wässriges Bindemittel nach Anspruch 1 oder 2, wobei das Polymerisat A als Hauptmonomer einen Ester der Acrylsäure oder Methacrylsäure mit einem $C_1$-bis $C_{12}$-Alkohol, eine vinylaromatische Verbindung, ein Nitril einer α,β-monoethylenisch ungesättigten Carbonsäure und/oder einen Vinylester einer $C_2$-bis $C_{12}$-Monocarbonsäure in einpolymerisierter Form enthält.

4. Wässriges Bindemittel nach einem der Ansprüche 1 bis 3, wobei das Polymerisat B als Mono- oder Dicarbonsäure mindestens eine Verbindung in einpolymerisierter Form enthält, die ausgewählt ist unter Acrylsäure, Methacrylsäure, Crotonsäure, Fumarsäure, Maleinsäure, Maleinsäureanhydrid, 2-Methylmaleinsäure und Itakonsäure.

5. Wässriges Bindemittel nach einem der Ansprüche 1 bis 4, wobei das Polyol C ein Alkanolamin ist.

6. Wässriges Bindemittel nach einem der Ansprüche 1 bis 5, wobei das Polyol C Triethanolamin ist.

7. Wässriges Bindemittel nach einem der Ansprüche 1 bis 6, wobei das Gewichtsverhältnis von Polymerisat A zu Polymerisat B (auf Feststoffbasis) 100:1 bis 1:100 und das Gewichtsverhältnis von Polymerisat B zu Polyol C (auf Feststoffbasis) 100:1 bis 1:1 beträgt.

8. Wässriges Bindemittel nach einem der Ansprüche 1 bis 7, wobei das Äquivalenzverhältnis der Carboxylgruppen der Polymerisate A und B zu den Hydroxylgruppen des Polyols C im Bereich von 20:1 bis 1:1 liegt.

9. Verwendung eines wässrigen Bindemittels gemäß einem der Ansprüche 1 bis 8 zur Herstellung von Formkörpern aus körnigen und/oder faserförmigen Substraten.

10. Verfahren zur Herstellung eines Formkörpers aus körnigen und/oder faserförmigen Substraten, **dadurch gekennzeichnet, dass** ein wässriges Bindemittel gemäß einem der Ansprüche 1 bis 8 auf die körnigen und/oder faserförmigen Substrate aufgebracht wird, gegebenenfalls die mit dem wässrigen Bindemittel behandelten körnigen und/oder faserförmigen Substrate in Form gebracht werden und die behandelten körnigen und/oder faserförmigen Substrate anschließend einem thermischen Behandlungsschritt bei einer Temperatur ≥ 110 °C unterzogen werden.

11. Verfahren nach Anspruch 10, **dadurch gekennzeichnet, dass** pro 100 g körniges und/oder faserförmiges Substrat ≥ 1 g und ≤ 100 g Bindemittel (berechnet als Summe der Gesamtmengen von Polymerisat A, Polymerisat B und Polyol C auf Feststoffbasis) eingesetzt werden.

12. Verfahren nach Anspruch 10 oder 11, **dadurch gekennzeichnet, dass** als körniges und/oder faserförmiges Substrat ein mechanisch verfestigtes oder chemisch vorgebundenes Faservlies eingesetzt wird.

13. Formkörper erhältlich nach einem Verfahren gemäß einem der Ansprüche 10 bis 12.

**Claims**

1. An aqueous binder for granular and/or fibrous substrates comprising as active constituents

   a) at least one polymer which is obtainable by free-radical addition polymerization and comprises in copolymerized form ≥ 5.5% and ≤ 20% by weight of an $\alpha,\beta$ -ethylenically unsaturated monocarboxylic or dicarboxylic acid [polymer A],
   b) at least one polymer which is obtainable by free-radical addition polymerization and comprises in copolymerized form ≥ 40% by weight of an $\alpha,\beta$ -ethylenically unsaturated monocarboxylic or dicarboxylic acid [polymer B], and
   c) at least one polyol compound having at least two hydroxyl groups [polyol C].

2. The aqueous binder according to claim 1, the polymer A comprising in copolymerized form as monocarboxylic or dicarboxylic acid at least one compound selected from the group comprising acrylic acid, methacrylic acid, crotonic acid, fumaric acid, maleic acid, maleic anhydride, 2-methylmaleic acid, and itaconic acid.

3. The aqueous binder according to claim 1 or 2, the polymer A comprising in copolymerized form as principal monomer an ester of acrylic acid or methacrylic acid with a $C_1$ to $C_{12}$ alcohol, a vinylaromatic compound, a nitrile of an $\alpha,\beta$-monoethylenically unsaturated carboxylic acid and/or a vinyl ester of a $C_2$ to $C_{12}$ monocarboxylic acid.

4. The aqueous binder according to any of claims 1 to 3, the polymer B comprising in copolymerized form as monocarboxylic or dicarboxylic acid at least one compound selected from acrylic acid, methacrylic acid, crotonic acid, fumaric acid, maleic acid, maleic anhydride, 2-methylmaleic acid, and itaconic acid.

5. The aqueous binder according to any of claims 1 to 4, the polyol C being an alkanolamine.

6. The aqueous binder according to any of claims 1 to 5, the polyol C being triethanolamine.

7. The aqueous binder according to any of claims 1 to 6, the weight ratio of polymer A to polymer B (based on solids) being 100:1 to 1:100 and the weight ratio of polymer B to polyol C (based on solids) being 100:1 to 1:1.

8. The aqueous binder according to any of claims 1 to 7, the equivalence ratio of the carboxyl groups of the polymer

A and B to the hydroxyl groups of the polyol C being in the range from 20:1 to 1:1.

**9.** The use of an aqueous binder according to any of claims 1 to 8 for producing shaped articles from granular and/or fibrous substrates.

**10.** A process for producing a shaped article from granular and/or fibrous substrates, which comprises applying an aqueous binder according to any of claims 1 to 8 to the granular and/or fibrous substrates, optionally shaping the granular and/or fibrous substrates treated with the aqueous binder, and then subjecting the treated granular and/or fibrous substrates to a thermal treatment step at a temperature ≥ 110°C.

**11.** The process according to claim 10, wherein ≥ 1 g and ≤ 100 g of binder (calculated as the sum of the total amounts of polymer A, polymer B, and polyol C based on solids) are used per 100 g of granular and/or fibrous substrate.

**12.** The process according to claim 10 or 11, wherein a mechanically consolidated or chemically bound fiber web is used as granular and/or fibrous substrate.

**13.** A shaped article obtainable by a process according to any of claims 10 to 12.

## Revendications

**1.** Liant aqueux pour substrats granulaires et/ou fibreux, contenant comme composants efficaces

a) au moins un polymérisat pouvant être obtenu par polymérisation radicalaire, qui contient sous forme incorporée par polymérisation ≥ 5,5 % en poids et ≤ 20 % en poids d'un acide mono- ou dicarboxylique à insaturation $\alpha,\beta$-éthylénique [polymérisat A],
b) au moins un polymérisat pouvant être obtenu par polymérisation radicalaire, qui contient sous forme incorporée par polymérisation ≥ 40 % en poids d'un acide mono- ou dicarboxylique à insaturation $\alpha,\beta$-éthylénique [polymérisat B], et
c) au moins un composé polyol comportant au moins deux groupes hydroxy [polyol C].

**2.** Liant aqueux selon la revendication 1, dans lequel le polymérisat A contient en tant qu'acide mono- ou dicarboxylique sous forme incorporée par polymérisation au moins un composé qui est choisi dans le groupe comprenant l'acide acrylique, l'acide méthacrylique, l'acide crotonique, l'acide fumarique, l'acide maléique, l'anhydride maléique, l'acide 2-méthylmaléique et l'acide itaconique.

**3.** Liant aqueux selon la revendication 1 ou 2, dans lequel le polymérisat A contient comme monomère principal sous forme incorporée par polymérisation un ester de l'acide acrylique ou de l'ester méthacrylique avec un alcool en $C_1$-$C_{12}$, un composé vinylaromatique, un nitrile d'un acide carboxylique à insaturation $\alpha,\beta$-monoéthylénique et/ou un ester vinylique d'un acide monocarboxylique en $C_2$-$C_{12}$.

**4.** Liant aqueux selon l'une quelconque des revendications 1 à 3, dans lequel le polymérisat B contient en tant qu'acide mono- ou dicarboxylique sous forme incorporée par polymérisation un composé qui est choisi parmi l'acide acrylique, l'acide méthacrylique, l'acide crotonique, l'acide fumarique, l'acide maléique, l'anhydride maléique, l'acide 2-méthylmaléique et l'acide itaconique.

**5.** Liant aqueux selon l'une quelconque des revendications 1 à 4, dans lequel le polyol C est une alcanolamine.

**6.** Liant aqueux selon l'une quelconque des revendications 1 à 5, dans lequel le polyol C est la triéthanolamine.

**7.** Liant aqueux selon l'une quelconque des revendications 1 à 6, dans lequel le rapport pondéral du polymérisat A au polymérisat B (sur la base de la matière solide) vaut de 100:1 à 1:100 et le rapport pondéral du polymérisat B au polyol C (sur la base de la matière solide) vaut de 100:1 à 1:1.

**8.** Liant aqueux selon l'une quelconque des revendications 1 à 7, dans lequel le rapport d'équivalents des groupes carboxy des polymérisats A et B aux groupes hydroxy du polyol C se situe dans la plage de 20:1 à 1:1.

**9.** Utilisation d'un liant aqueux selon l'une quelconque des revendications 1 à 8, pour la production de corps moulés

à partir de substrats granulaires et/ou fibreux.

**10.** Procédé pour la production d'un corps moulé à partir de substrats granulaires et/ou fibreux, **caractérisé en ce qu'**on applique un liant aqueux selon l'une quelconque des revendications 1 à 8 sur les substrats granulaires et/ou fibreux, éventuellement on met en forme les substrats granulaires et/ou fibreux traités par le liant aqueux et ensuite on soumet à une étape de traitement thermique à une température de ≥ 110 °C les substrats granulaires et/ou fibreux traités.

**11.** Procédé selon la revendication 10, **caractérisé en ce que** pour 100 g de substrat granulaire et/ou fibreux on utilise ≥ 1 g etc 100 g de liant (calculé en tant que somme des quantités totales de polymérisat A, polymérisat B et polyol C sur la base de la matière solide).

**12.** Procédé selon la revendication 10 ou 11, **caractérisé en ce que** comme substrat granulaire et/ou fibreux on utilise une nappe de fibres consolidée mécaniquement ou pré-liée chimiquement.

**13.** Corps moulé pouvant être obtenu conformément à un procédé selon l'une quelconque des revendications 10 à 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4076917 A
- EP 445578 A
- EP 583086 A
- EP 651088 A
- EP 672920 A
- DE 2214450 A
- US 5143582 A
- WO 9909100 A
- DE 4003422 A
- WO 9745461 A


### In der Beschreibung aufgeführte Nicht-Patentliteratur


- Encyclopedia of Polymer Science and Engineering. 1987, vol. 8, 659 ff
- **BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **G. KANIG.** *Kolloid-Zeitschrift & Zeitschrift für Polymere,* vol. 190, 1
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. A21, 169
- **J. BRANDRUP ; E.H. IMMERGUT.** Polymer Handbook. J. Wiley, 1966
- POLYMER HANDBOOK. J.Wiley, 1975
- POLYMER HANDBOOK. J. Wiley, 1989
- **A. ECHTE.** Handbuch der Technischen Polymerchemie. VCH, 1993
- **B. VOLLMERT.** Grundriss der Makromolekularen Chemie. E. Vollmert Verlag, 1988, vol. 1
- **L. KOTZEVA.** *J. Polym. Sci.,* 1989, vol. A-27, 1325ff
- **C. ERBIL et al.** *Polymer,* 2000, vol. 41, 1391ff
- **C. YANG ; X. LU YUN.** *J. Polym. Sci.,* 2000, vol. 75 (2), 327ff
- **M. SEN et al.** *Polymer,* 1999, vol. 40 (9), 913ff
- **F. WANG et al.** *Anal. Chem.,* 1996, vol. 68, 2477ff
- **J. VELADA et al.** *Macromol. Chem. and Phys.,* 1995, vol. 196, 3171ff
- **J.M. COWIE ; C. HAQ.** *Br. Polym. J.,* 1977, vol. 9, 241ff
- **J. VELADA et al.** *Polymer Degradation and Stability,* 1996, vol. 52, 273ff
- **A. HORTA et al.** *Makromol. Chem., Rapid Commun.,* 1987, vol. 8, 523ff
- **T. HIRANO et al.** *J. Polym. Sci.,* 2000, vol. A-38, 2487ff
- **B.E. TATE.** *Adv. Polymer Sci.,* 1967, vol. 5, 214ff